# FASCICULE DE BREVET EUROPEEN

(11) **EP 2 818 604 B1**
(45) Date de publication et mention de la délivrance du brevet: **30.03.2016**
(21) Numéro de dépôt: 14174816.0
(22) Date de dépôt: 27.06.2014
(51) Int. Cl.: E04B 1/348, B65D 90/00, B60P 7/13

(54) **Dispositif et procédé de bridage d'un conteneur au sol**
Vorrichtung und Verfahren zum Festspannen eines Behälters am Boden
Device and method for clamping a container to the ground

(30) Priorité: 28.06.2013 FR 1356339
(43) Date de publication de la demande: 31.12.2014
(73) Titulaire: Neobeit, 94523 Rungis (FR)
(72) Inventeur: Frantz, Lionel, 92340 Bourg la Reine (FR); Khairallah, Fadi, 78000 Versailles (FR)
(74) Mandataire: Osha Liang

(56) Documents cités:
- WO-A1-2005/038155
- FR-A1- 2 955 337

## Description

### Domaine technique

La présente description concerne un dispositif et un procédé de bridage d'un conteneur au sol tel qu'un conteneur destiné à l'habitat, par exemple pour la construction de logements, bureaux, sièges sociaux, salles de réunion, bases de vie, etc.

### Etat de la technique

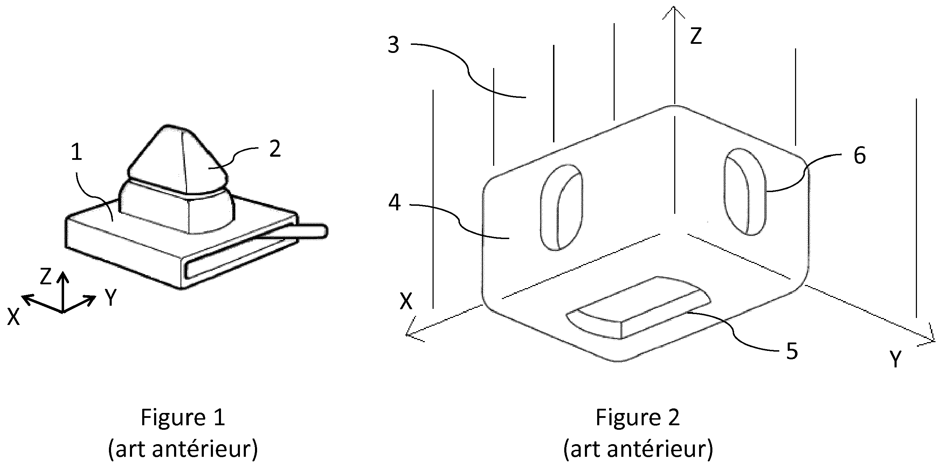

Différents types de systèmes de verrouillage de conteneurs de dimensions normalisées selon la norme ISO (Organisation internationale de normalisation) sont connus dans les domaines des transports maritime, ferroviaire et routier. Parmi ces systèmes, le dispositif de type « verrou tournant » ou « twist-lock », tel que représenté par exemple sur la Figure 1, est le plus généralement utilisé. Un « twist-lock » est constitué d'une pièce métallique 1 permettant de sécuriser un conteneur 3, dont un coin est représenté par exemple sur la Figure 2, au moyen d'un tenon pivotable 2 se logeant dans une ouverture 5 (i.e. mortaise) d'une pièce de coin 4 (i.e. pièce d'angle, « corner fitting », « corner casting ») du conteneur 3. Une fois inséré dans la pièce de coin 4, le tenon pivotable 2 est tourné à 90° pour verrouiller le conteneur 3 au sol ou à un moyen de transport.

Les « twist-locks » peuvent être utilisés pour l'ancrage au sol de conteneurs destinés à l'habitat (voir par exemple la demande de brevet publiée GB2487650). Par contre, de tels dispositifs restent mal adaptés. En effet, un « twist-lock » ne permet pas la ferme immobilisation (i.e. bridage) d'un conteneur mais permet seulement d'empêcher la pièce de coin de se dégager du tenon pivotable. Chaque conteneur ainsi sécurisé par un « twist-lock » possède alors des jeux importants selon les axes X, Y et Z tels que représentés sur la Figure 2, rendant l'ancrage au sol d'un conteneur approximative et donc inadaptée à la construction d'édifices destinés à l'habitat. De plus, les « twist-locks » ne permettent qu'un alignement des conteneurs de façon rudimentaire (supérieur au centimètre) alors que les édifices destinés à l'habitat nécessitent un alignement précis (inférieur au centimètre). Par ailleurs, les « twist-locks » sont facilement déverrouillables, générant ainsi une source supplémentaire d'insécurité.

D'autres systèmes de verrouillage sont connus pour le bridage de conteneurs destinés à l'habitat. Ce sont par exemple des dispositifs associant des supports vissés au sol à des boulons et plaques métalliques insérés dans les pièces de coin (voir par exemple la demande de brevet publiée KR100862179). Ces dispositifs ne permettent cependant pas le centrage et l'alignement de conteneurs avec précision. De plus, les têtes de vis et écrous ainsi insérés dans les pièces de coin sont difficile d'accès pour le serrage.

La demande de brevet FR2955337 décrit un dispositif de solidification et d'isolation d'un assemblage de conteneurs comprenant une plaque support en acier ayant des perforations pour fixation sur fondation et un ou plusieurs tenons entrant dans une pièce de coin inférieure d'un conteneur.

La publication internationale WO 2005/038155 décrit un élément connecteur comprenant un élément saillant et une plaque soudée à un anneau de fondation, l'élément saillant ayant un trou fileté pour recevoir une vis sécurisant une plaque de verrouillage portant une saillie configurée pour être insérée dans une ouverture de pièce de coin d'un conteneur.

La présente description à pour but de remédier aux déficiences mentionnées ci-dessus. Un premier objet de la présente description est donc de fournir un dispositif et un procédé de bridage permettant de sécuriser un conteneur au sol à la fois de façon ferme et précise. Un deuxième objet de la présente description est de fournir un dispositif de bridage d'un conteneur au sol comprenant un minimum de pièces, permettant une fabrication simplifiée et à bas coût et requérant un minimum d'étapes pour le centrage, l'alignement et l'immobilisation de conteneurs.

### Résumé de l'invention

Selon un premier aspect, la présente description concerne un dispositif de bridage d'un conteneur au sol comprenant: un élément d'alignement comprenant une bêche d'ancrage au sol et un premier tenon adapté à saillir dans une ouverture inférieure d'une pièce de coin d'un premier conteneur, un premier élément de bridage comprenant une première portion et une deuxième portion s'étendant sensiblement perpendiculairement à la première portion, la première portion comprenant un élément de projection adapté à saillir dans une ouverture latérale de la pièce de coin du premier conteneur, et au moins un premier élément d'ancrage adapté à connecter par pression la deuxième portion du premier élément de bridage au sol.

Un dispositif de bridage d'un conteneur au sol ainsi décrit permet de sécuriser et immobiliser à la fois de façon rapide, ferme et précise un conteneur au sol et ne requière qu'un minimum d'étapes pour le centrage, l'alignement et l'immobilisation du conteneur.

Selon un deuxième aspect, la présente description concerne un procédé de bridage d'au moins un premier conteneur au sol comprenant l'ancrage au sol d'éléments d'alignement aux endroits prévu pour les pièces de coin du premier conteneur, chaque élément d'alignement comprenant une bêche d'ancrage et au moins un premier tenon, le positionnement, sur chaque élément d'alignement, d'une pièce de coin du premier conteneur au moyen du premier tenon venant s'engager dans une ouverture inférieure de la pièce de coin du premier conteneur, l'insertion, dans une ouverture latérale de la pièce de coin du premier conteneur, d'un élément de projection d'une première portion d'un premier élément de bridage, le premier élément de bridage comprenant une deuxième portion s'étendant perpendiculairement à la première portion, la connexion au sol par pression de la deuxième portion du premier élément de bridage par un premier élément d'ancrage.

### Brève description des dessins

La Figure 1 (déjà décrite) représente schématiquement un dispositif de type « verrou tournant » ou « twist-lock » selon l'art antérieur ;
La Figure 2 (déjà décrite) représente schématiquement une pièce de coin d'un conteneur selon l'art antérieur ;
La Figure 3 représente une vue isométrique d'une pièce de coin bridée par un dispositif de bridage d'un conteneur au sol selon un premier mode de réalisation de la présente description ;
Les Figures 4A et 4B représentent schématiquement une vue de face et une vue en coupe (selon la ligne A-A de la vue représentée sur la Figure 4A) d'un élément d'alignement d'un dispositif de bridage d'un conteneur au sol selon un exemple de réalisation adapté au mode de réalisation représenté sur la Figure 3 ;
Les Figures 5A à 5C représentent schématiquement une vue de face, une première vue en coupe (selon la ligne C-C de la vue représentée sur la Figure 5A) et une deuxième vue en coupe (selon la ligne D-D de la vue représentée sur la Figure 5A) d'un élément de bridage d'un dispositif de bridage d'un conteneur au sol selon un exemple de réalisation ;
Les Figures 6A à 6E illustrent les différentes étapes d'un procédé de bridage d'un conteneur au sol, selon un mode de réalisation de la présente description ;
Les Figures 7A à 7C représentent respectivement une vue de face d'une pièce de coin bridée au sol au moyen d'un dispositif de bridage selon la présente description, une première vue en coupe (selon la ligne E-E de la vue représentée sur la Figure 7A) et une deuxième vue en coupe (selon la ligne F-F de la vue représentée sur la Figure 7A) ;
La Figure 8 représente une vue isométrique de deux pièces de coin bridées au sol par un dispositif de bridage d'un conteneur au sol selon un deuxième mode de réalisation de la présente description ;
Les Figures 9A et 9B représentent schématiquement une vue de face et une vue en coupe (selon la ligne G-G de la vue représentée sur la Figure 9A) d'un élément d'alignement d'un dispositif de bridage d'un conteneur au sol selon un exemple de réalisation adapté au mode de réalisation représenté sur la Figure 8.

### Description détaillée

Divers modes de réalisation de dispositifs et de procédés de bridage d'un conteneur au sol selon la présente description sont décrits en référence aux Figures ci-jointes. Les Figures sont représentées selon des orientations arbitraires (axe longitudinal X, axe transversal Y et axe vertical Z), mais il sera apparent pour l'homme du métier que les modes de réalisations présentés peuvent être réalisés selon d'autres orientations. Par ailleurs, les éléments connus de l'homme du métier ne seront pas décrits en détails afin d'éviter de compliquer inutilement la description.

Les dispositifs et procédés de bridage d'un conteneur au sol selon la présente description sont particulièrement adaptés au bridage au sol de conteneurs destinés à l'habitat (par exemple pour la construction de logements, bureaux, sièges sociaux, salles de réunion, bases de vie, etc.) et qui sont généralement de dimensions normalisées (par exemple, longueur X de 2,991 m, 6,058 m, 9,144 m et 12,192 m (respectivement 10, 20, 30 et 40 pieds) pour une largeur Y de 2,438 m (8 pieds) et une hauteur Z de 2,591 m ou 2,896 m (8.5 ou 9.5 pieds)). Cependant, il sera apparent pour l'homme du métier que les dispositifs et procédés de bridage d'un conteneur au sol selon la présente description sont également adaptés au bridage au sol de tous types de conteneurs comprenant des pièces de coin ayant au moins deux ouvertures et agencées sur deux faces perpendiculaires l'une à l'autre.

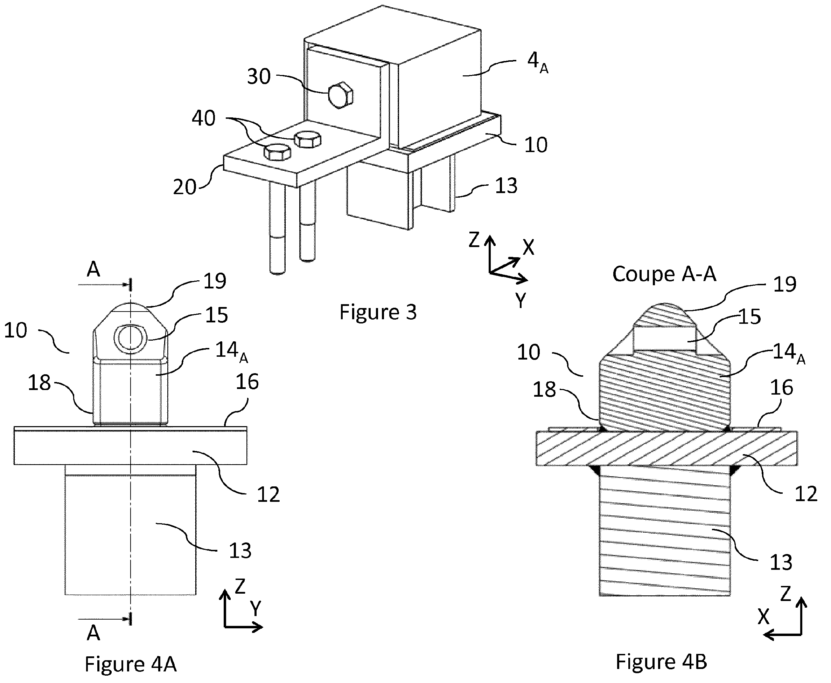

Un premier mode de réalisation d'un dispositif et d'un procédé de bridage d'un conteneur au sol selon la présente description est décrit en référence aux Figures 3 à 7.

La Figure 3 décrit selon un exemple, une pièce de coin 4_{A} d'un premier conteneur et un dispositif de bridage de la pièce de coin au sol. Selon ce premier mode de réalisation, le dispositif de bridage comprend un élément d'alignement 10, un premier élément de bridage 20, un premier élément de fixation 30 et au moins un premier élément d'ancrage 40. Le dispositif de bridage décrit ici est adapté pour l'immobilisation d'un conteneur au sol, c.à.d. pour le bridage d'une pièce de coin inférieure 4_{A} d'un premier conteneur. Dans la présente description, une pièce de coin inférieure correspond à une pièce de coin située sur le dessous du conteneur lorsque le conteneur est disposé sur le sol. il sera également apparent pour l'homme du métier que les dispositifs et procédés de bridage selon la présente description sont adaptés pour le bridage de conteneurs dans n'importe quelle formation solide au sol, par exemple, dans du béton, de la roche ou dans une structure métallique.

Les Figures 4A et 4B représentent un exemple d'un élément d'alignement du dispositif de bridage selon la présente description. L'élément d'alignement 10 comprend selon cet exemple une bêche 13 destinée à être fixé dans le sol (par exemple ancrée dans une surface bétonnée) et un premier tenon 14_{A} destiné à pénétrer dans une ouverture inférieure 5_{A} d'une pièce de coin 4_{A} du conteneur que l'on cherche à fixer. Plus précisément, l'élément d'alignement 10 comprend dans cet exemple un élément de support 12, par exemple une plaque, par exemple une plaque métallique, disposé entre et connecté à la bêche 13 et à une portion proximale 18 du premier tenon 14_{A}. Selon un mode de réalisation, la bêche 13 est une ancre à béton, par exemple une ancre à béton métallique en forme de « H », par exemple moulée en une seule pièce avec l'élément de support 12, ou soudée, bridée et/ou vissée sur l'élément de support 12. Selon un mode de réalisation, le premier tenon 14_{A} comprend une portion distale 19 pointue ou convexe et préférablement conique facilitant l'insertion de l'élément d'alignement 10 dans les pièces de coin 4. Par exemple, l'élément de support 12 et le tenon 14_{A} sont moulés en une seule pièce. Selon un autre mode de réalisation, le tenon est soudé, bridé et/ou vissé à l'élément de support 12.

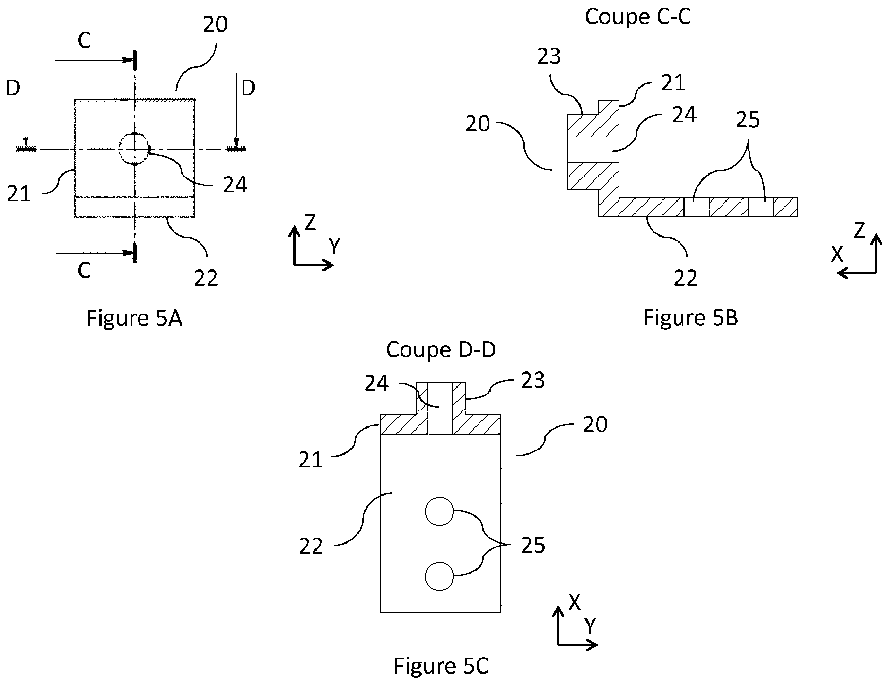

Les Figures 5A à 5C représentent un exemple d'élément de bridage. L'élément de bridage 20 comprend une première portion 21 (par exemple une plaque métallique) sur laquelle est disposé sur une première face, un élément de projection 23 destiné à pénétrer dans une ouverture latérale 6_{A} de la pièce de coin 4_{A} du premier conteneur 3. L'élément de bridage 20 comprend, en outre, une deuxième portion 22 (par exemple une plaque métallique), s'étendant à partir de la première portion, dans une direction opposée à celle de l'élément de projection. Par exemple, les deux portions 21 et 22 sont sensiblement perpendiculaires, formant une équerre. Selon une variante, l'élément de bridage 20 comprenant la première portion 21, la deuxième portion 22 et l'élément de projection 23 est formé en une seule pièce moulée, ou forgée ou usinée. Dans l'exemple de réalisation des figures 5A à 5C, la première portion 21 comprend, en outre, un premier orifice 24 traversant la première portion 21 et l'élément de projection 23 pour le passage de l'élément de fixation 30. Afin de connecter par pression la deuxième portion 22 au sol, la deuxième portion 22 comprend, en outre, au moins un deuxième orifice 25 traversant la deuxième portion 22 pour le passage d'un ou plusieurs éléments d'ancrage 40. L'ancrage peut être réalisé par vissage au sol de l'élément d'ancrage 40. Par exemple, l'élément d'ancrage 40 est une vis. Grâce à la coopération de l'élément d'alignement 10 et de l'élément de bridage 20, un bridage du conteneur au sol est obtenu avec une très bonne précision d'alignement et un verrouillage sécurisé est réalisé.

Comme cela sera décrit plus en détails par la suite, le premier élément de fixation 30 peut, selon une variante, venir connecter par pression l'élément de projection 23 de l'élément de bridage 20 avec le premier tenon 14_{A} de l'élément d'alignement, facilitant la mise en place de l'élément de bridage et le serrage de l'élément d'alignement 10 avec la première pièce de coin 4_{A}. Dans cette variante, le tenon 14_{A} peut être percé d'un trou 15, débouchant ou non, destiné à recevoir une extrémité de l'élément de fixation 30. La fixation peut être réalisée, par exemple, par vissage, l'élément de fixation 30 et le trou 15 étant adaptés au mode de fixation. Par exemple, le trou 15 est un trou fileté et l'élément de fixation est une vis.

Selon un mode de réalisation, l'élément d'alignement 10 comprend en outre une ou plusieurs cale(s) d'épaisseur 16, disposée(s) sur tout ou partie des surfaces de la plaque formant l'élément de support. La cale d'épaisseur, par exemple en élastomère ou caoutchouc, ou en matériau métallique (e.g. acier), permet d'ajuster le jeu de l'ensemble à la fin de l'opération de bridage, afin de compenser les éventuelles variations d'horizontalité et de verticalité du conteneur. Selon un mode de réalisation, les cale(s) d'épaisseur 16 peuvent être disposées sur une ou les deux surfaces horizontales de l'élément de support 12, autour du premier tenon 14_{A}. Selon un mode de réalisation, des cales d'épaisseur 16 sont disposées de part et d'autre du premier tenon 14_{A}.

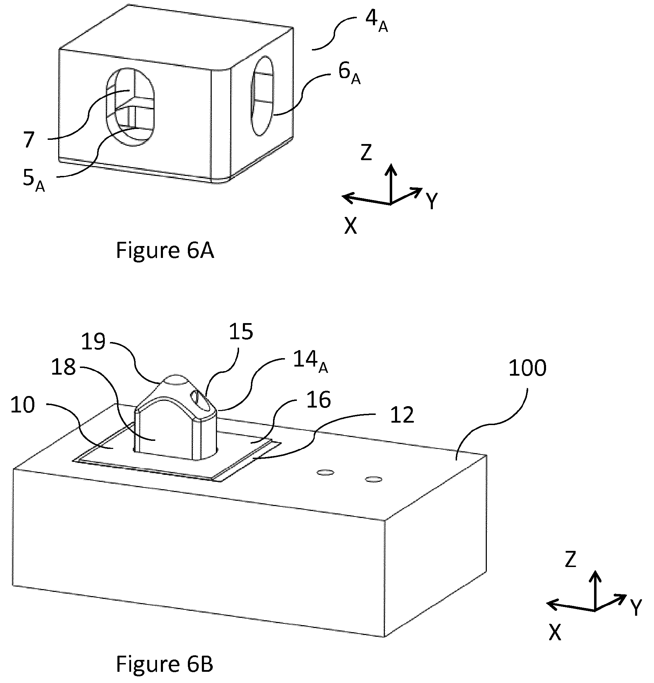

Le bridage du conteneur au moyen du dispositif précédemment décrit ne requière qu'un minimum d'étapes pour le centrage, l'alignement et l'immobilisation des pièces, comme cela est décrit ci-dessous, au moyen des Figures 6A à 6E.

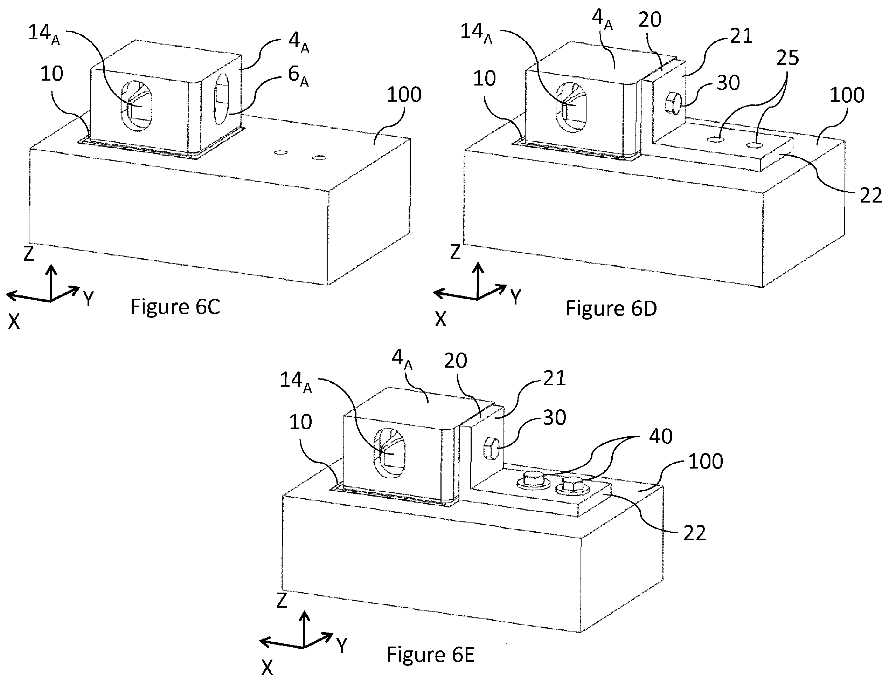

Le bridage d'un conteneur au sol peut être effectué en parallèle sur les quatre coins du conteneur. Il comprend dans une première étape l'ancrage dans le sol d'éléments d'alignement 10 aux endroits prévus pour la fixation de chaque pièce de coin du conteneur. Comme cela apparaît sur la Figure 6B, chaque élément d'alignement 10 est ainsi fixé dans le sol (représenté sous forme d'un parallélépipède 100 sur la Figure 6B) au moyen de la bêche 13. La pièce de coin 4_{A} du conteneur (Figure 6A) est ensuite positionnée sur l'élément d'alignement 10 au moyen du tenon 14_{A} s'insérant dans l'ouverture inférieure 5_{A} de la pièce de coin 4_{A} (Figure 6C). L'élément de bridage 20 est ensuite positionné (Figure 6D), de telle sorte que l'élément de projection 23 pénètre dans une ouverture 6_{A} d'une face latérale de la pièce de coin 4_{A}. Au moins un élément d'ancrage 40 est ensuite utilisé pour connecter par pression la deuxième portion 22 de l'élément de bridage 20 au sol (Figure 6E), assurant ainsi l'ancrage au sol du conteneur. L'élément de bridage 20 ainsi positionné dans la pièce de coin au moyen de l'élément de projection 23 puis ancré au sol permet de plaquer fermement la pièce de coin 4_{A} au sol. Grâce à la surface d'appui entre la première portion 21 de l'élément de bridage 20 et la face latérale de la pièce de coin, une immobilisation est également obtenue selon l'axe longitudinal (axe X).

Selon une variante représentée sur les figures 6A à 6E, un élément de fixation 30 est utilisé pour connecter par pression l'élément de projection 23 au tenon 14_{A}. Cet élément de fixation supplémentaire facilite la mise en place et permet de minimiser le jeu entre la pièce de coin et l'élément de bridage, selon l'axe longitudinal (axe X).

Selon une variante, le procédé de bridage peut comprendre en outre le coulage d'un matériau de fixation, par exemple une résine de scellement, dans un espace vide 7 à l'intérieur de la pièce de coin. La résine de scellement permet une sécurisation accrue de l'édifice en empêchant tout glissement de l'ensemble comprenant les pièces de coin et le dispositif de bridage d'un conteneur au sol.

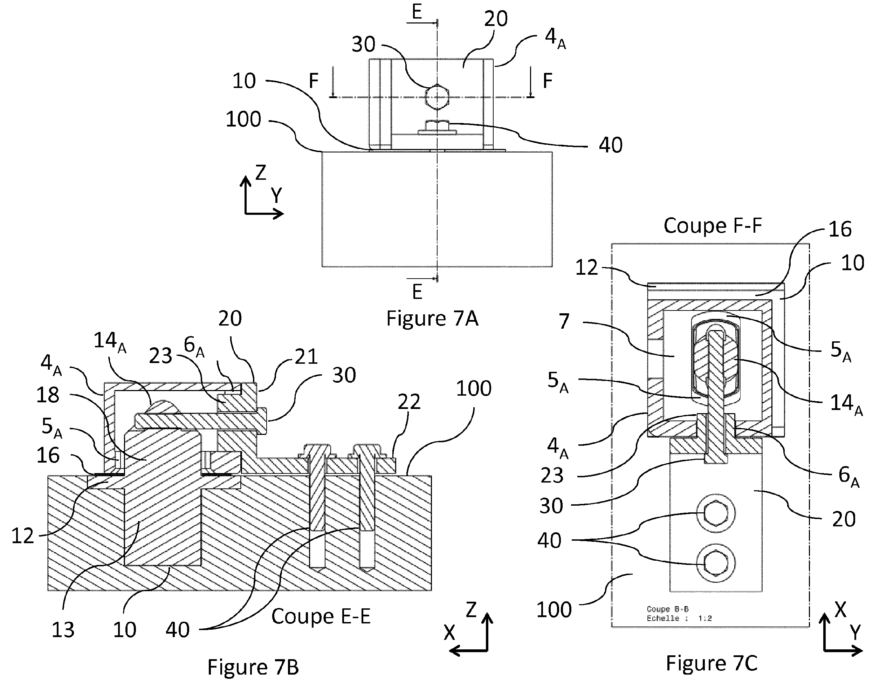

Les Figures 7A à 7C représentent la pièce de coin immobilisée au sol grâce au dispositif de bridage, à l'issu du procédé décrit au moyen des Figures 6A à 6^{E}, selon une variante de réalisation. les Figures 7B et 7C sont des coupes de la vue de face représentée sur la Figure 7A. Grâce à l'ancrage de l'élément de bridage 20 préalablement positionné, au moyen de l'élément de projection 23, dans la pièce de coin 4_{A} du conteneur, on assure la fixation au sol de la pièce de coin avec une excellente précision de positionnement et de façon sécurisée. Dans l'exemple des figures 7A à 7C, l'élément de fixation 30 permet en outre, par serrage entre l'élément de bridage 20 et l'élément d'alignement 10, de minimiser le jeu entre la pièce de coin et l'élément de bridage.

Le dispositif et le procédé de bridage tels que décrit précédemment s'appliquent également au bridage de deux conteneurs au sol, comme cela est expliqué plus en détails ci-dessous.

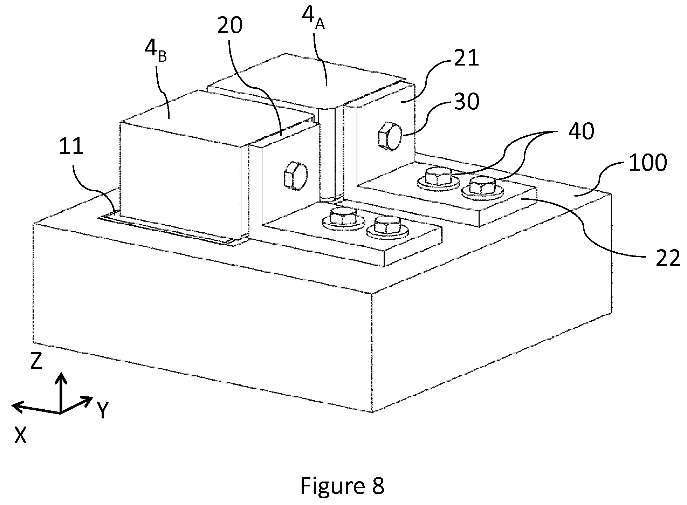

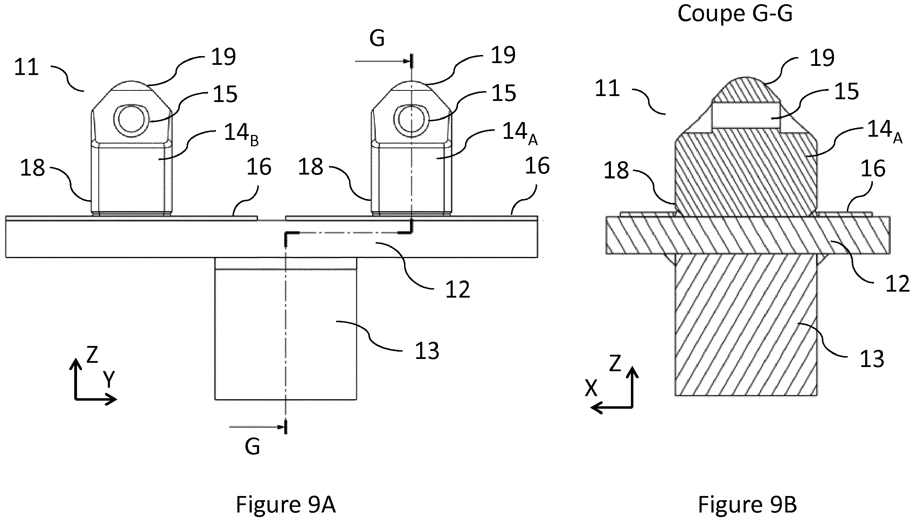

Ainsi, selon un deuxième mode de réalisation, le dispositif et le procédé de bridage d'un conteneur au sol sont également adaptés pour le bridage de deux conteneurs entre eux et au sol. Un exemple de dispositif de bridage de conteneurs au sol selon ce deuxième mode de réalisation est décrit sur les Figures 8, 9A et 9B.

Selon ce deuxième mode de réalisation, l'élément d'alignement référencé 11 sur les Figures, comprend, outre les caractéristiques techniques précédemment décrites pour l'élément d'alignement 10, un deuxième tenon 14_{B} destiné à s'insérer dans une ouverture inférieure 5_{B} une pièce de coin 4_{B} d'un deuxième conteneur. Selon ce deuxième mode de réalisation, le dispositif de bridage de conteneurs au sol comprend un deuxième élément de bridage 20, par exemple identique au premier élément de bridage 20, comprenant un élément de projection 23 destiné à pénétrer dans une ouverture latérale 6_{B} de la pièce de coin 4_{B} du deuxième conteneur. Enfin, selon ce deuxième mode de réalisation, le dispositif de bridage peut comprendre également un deuxième élément de fixation 30 permettant la connexion par pression de l'élément de projection 23 du deuxième élément de bridage 20 avec le tenon 14_{B} de l'élément d'alignement 11.

Plus précisément, l'élément d'alignement 11 tel que décrit sur les Figures 9A et 9B comprend un élément de support 12 et des premier et deuxième tenons 14_{A} et 14_{B} comme précédemment définis, l'élément de support 12 étant disposé entre et connecté à la bêche 13 d'une part et aux premier et deuxième tenons 14_{A} et 14_{B} d'autre part. Selon ce deuxième mode de réalisation, l'élément d'alignement 11 peut comprendre, en outre, une ou plusieurs cale(s) d'épaisseur 16 comme précédemment définis. Chaque tenon présente avantageusement une portion proximale 18 en contact avec l'élément de support 12 et une portion distale 19, avantageusement convexe, par exemple conique, percée d'un trou débouchant ou non 15 et adapté à la fixation de l'élément de fixation 30.

Le dispositif et le procédé de bridage de conteneurs au sol selon ce deuxième mode de réalisation permettent comme précédemment, d'immobiliser deux conteneurs avec précision et sécurité.

Bien que décrite à travers un certain nombre d'exemples de réalisation détaillés, les dispositifs et procédés de bridage d'un conteneur au sol décrits dans la présente demande comprennent différentes variantes, modifications et perfectionnements qui apparaîtront de façon évidente à l'homme de l'art, étant entendu que ces différentes variantes, modifications et perfectionnements font partie de la portée de l'invention, telle que définie par les revendications qui suivent.

## Revendications

1. Dispositif de bridage d'un conteneur au sol comprenant :
un élément d'alignement (10, 11) comprenant un premier tenon (14_{A}) adapté à saillir dans une ouverture inférieure (5_{A}) d'une pièce de coin (4_{A}) d'un premier conteneur,
et un premier élément de bridage (20) comprenant une première portion (21), ladite première portion (21) comprenant un élément de projection (23) adapté à saillir dans une ouverture latérale (6A) de la pièce de coin (4A) du premier conteneur,
**caractérisé en ce que** l'élément d'alignement (10, 11) comprend une bêche d'ancrage au sol (13),
et **en ce que** le premier élément de bridage (20) comprend une deuxième portion (22) s'étendant sensiblement perpendiculairement à la première portion (21) et au moins un premier élément d'ancrage (40) adapté à ancrer la deuxième portion (22) du premier élément de bridage (20) au sol.

2. Dispositif selon la revendication 1, comprenant en outre un premier élément de fixation (30) adapté à fixer le premier tenon (14A) à l'élément de projection (23) du premier élément de bridage (20).

3. Dispositif selon l'une quelconque des revendications précédentes, dans lequel l'élément d'alignement (10, 11) comprend un élément de support (12) disposé entre et connecté à la bêche (13) et au premier tenon (14_{A}).

4. Dispositif selon la revendication 3, dans lequel l'élément de support (12) comprend une cale d'épaisseur (16) disposée sur tout ou partie d'au moins une surface de l'élément de support (12).

5. Dispositif selon l'une quelconque des revendications précédentes, dans lequel :
l'élément d'alignement (11) comprend, en outre, un deuxième tenon (14_{B}) adapté à saillir dans une ouverture inférieure (5_{B}) d'une pièce de coin (4_{B}) d'un deuxième conteneur,
le dispositif comprenant, en outre :
un deuxième élément de bridage (20) comprenant une première portion (21) et une deuxième portion (22) s'étendant sensiblement perpendiculairement à la première portion (21), la première portion (21) comprenant un élément de projection (23) adapté à saillir dans une ouverture latérale (6_{B}) de la pièce de coin (4_{B}) du deuxième conteneur,
au moins un deuxième élément d'ancrage (40) adapté à ancrer la deuxième portion (22) du deuxième élément de bridage (20) au sol.

6. Dispositif selon la revendication 5, comprenant en outre un deuxième élément de fixation (30) adapté à fixer le deuxième tenon (14_{B}) à l'élément de projection (23) du deuxième élément de bridage (20).

7. Procédé de bridage d'au moins un premier conteneur au sol comprenant :
l'ancrage au sol d'éléments d'alignement (10, 11) aux endroits prévu pour les pièces de coin du premier conteneur, chaque élément d'alignement comprenant au moins un premier tenon (14_{A}),
le positionnement, sur chaque élément d'alignement (10, 11), d'une pièce de coin (4A) du premier conteneur au moyen du premier tenon (14 A) venant s'engager dans une ouverture inférieure (5A) de la pièce de coin (4A) du premier conteneur,
et l'insertion, dans une ouverture latérale (6A) de la pièce de coin (4A) du premier conteneur, d'un élément de projection (23) d'une première portion (21) d'un premier élément de bridage (20),
**caractérisé en ce que** l'élément d'alignement (10, 11) comprend une bêche d'ancrage au sol (13),
et **en ce que** le premier élément de bridage (20) comprend une deuxième portion (22) s'étendant perpendiculairement à la première portion (21),
et **en ce que** la deuxième portion (22) du premier élément de bridage (20) est ancrée au sol par un premier élément d'ancrage (40).

8. Procédé de bridage selon la revendication 7, comprenant en outre la fixation du premier tenon (14A) et de l'élément de projection (23) du premier élément de bridage (20) au moyen d'un premier élément de fixation (30).

9. Procédé de bridage selon l'une quelconque des revendications 7 ou 8 adapté au bridage de deux conteneurs au sol, dans lequel au moins un élément d'alignement (11) comprenant une bêche d'ancrage (13) et au moins un premier tenon (14_{A}) et un deuxième tenon (14_{B}), le procédé comprend en outre :
le positionnement, sur ledit élément d'alignement (11), d'une pièce de coin (4_{B}) du deuxième conteneur au moyen du deuxième tenon (14_{B}) venant s'engager dans une ouverture inférieure (5_{B}) de la pièce de coin (4_{B}) du deuxième conteneur,
l'insertion, dans une ouverture latérale (6_{B}) de la pièce de coin (4_{B}) du deuxième conteneur, d'un élément de projection (23) d'une première portion (21) d'un deuxième élément de bridage (20), le deuxième élément de bridage (20) comprenant une deuxième portion (22) s'étendant perpendiculairement à la première portion (21),
l'ancrage au sol de la deuxième portion (22) du deuxième élément de bridage (20) par un premier élément d'ancrage (40).

10. Procédé de bridage selon la revendication 9, comprenant en outre la fixation du premier tenon (14_{B}) et de l'élément de projection (23) du deuxième élément de bridage (20) au moyen d'un deuxième élément de fixation (30).

## Patentansprüche

1. Vorrichtung zum Festspannen von Behältern am Boden, umfassend:
ein Ausrichtungselement (10, 11) mit einem ersten Zapfen (14A), der geeignet ist, in eine untere Öffnung (5A) eines Eckstücks (4A) eines ersten Behälters zu ragen, und
ein erstes Festspannelement (20) mit einem ersten Abschnitt (21), wobei der erste Abschnitt (21) ein vorspringendes Element (23) aufweist, das geeignet ist, in eine seitliche Öffnung (6A) des Eckstücks (4A) des ersten Behälters zu ragen,
**dadurch gekennzeichnet, dass**
das Ausrichtungselement (10, 11) einen Bodenverankerungsspaten (13) aufweist und
das erste Festspannelement (20) einen zweiten Abschnitt (22) aufweist, der sich im Wesentlichen senkrecht zu dem ersten Abschnitt (21) erstreckt, und mindestens ein erstes Verankerungselement (40), das geeignet ist, den zweiten Abschnitt (22) des ersten Festspannelements (20) am Boden zu verankern.

2. Vorrichtung nach Anspruch 1, umfassend ferner ein erstes Befestigungselement (30), das geeignet ist, den ersten Zapfen (14A) an dem vorspringenden Element (23) des ersten Festspannelements (20) zu befestigen.

3. Vorrichtung nach einem beliebigen der vorhergehenden Ansprüche, bei der das Ausrichtungselement (10, 11) ein zwischen dem Spaten (13) und dem ersten Zapfen (14A) angeordnetes und damit verbundenes tragendes Element (12) aufweist.

4. Vorrichtung nach Anspruch 3, bei der das tragende Element (12) ein Ausgleichstück (16) aufweist, das auf mindestens einer gesamten Fläche des tragenden Elements (12) oder auf einem Teil davon angeordnet ist.

5. Vorrichtung nach einem beliebigen der vorhergehenden Ansprüche, bei der das Ausrichtungselement (11) ferner einen zweiten Zapfen (14B) aufweist, der geeignet ist, in eine untere Öffnung (5B) eines Eckstücks (4B) eines zweiten Behälters zu ragen,
wobei die Vorrichtung ferner Folgendes aufweist:
ein zweites Festspannelement (20) mit einem ersten Abschnitt (21) und einem zweiten Abschnitt (22), der sich im Wesentlichen senkrecht zu dem ersten Abschnitt (21) erstreckt, wobei der erste Abschnitt (21) ein vorspringendes Element (23) aufweist, das geeignet ist, in eine seitliche Öffnung (6B) des Eckstücks (4B) des zweiten Behälters zu ragen,
mindestens ein zweites Verankerungselement (40), das geeignet ist, den zweiten Abschnitt (22) des zweiten Festspannelements (20) am Boden zu verankern.

6. Vorrichtung nach Anspruch 5, umfassend ferner ein zweites Befestigungselement (30), das geeignet ist, den zweiten Zapfen (14B) an dem vorspringenden Element (23) des zweiten Festspannelements (20) zu befestigen.

7. Verfahren, um mindestens einen ersten Behälter am Boden festzuspannen, umfassend:
das Verankern von Ausrichtungselementen (10, 11) am Boden an den für die Eckstücke des ersten Behälters vorgesehenen Stellen, wobei jedes Ausrichtungselement mindestens einen ersten Zapfen (14A) aufweist,
die Positionierung - an jedem Ausrichtungselement (10, 11) - eines Eckstücks (4A) des ersten Behälters mittels des ersten Zapfens (14A), der in eine untere Öffnung (5A) des Eckstücks (4A) des ersten Behälters greift, und
das Einsetzen - in eine seitliche Öffnung (6A) des Eckstücks (4A) des ersten Behälters - eines vorspringendev Elements (23) eines ersten Abschnitts (21) eines ersten Festspannelements (20),
**dadurch gekennzeichnet, dass** das Ausrichtungselement (10, 11) einen Bodenverankerungsspaten (13) aufweist und
das erste Festspannelement (20) einen zweiten Abschnitt (22) aufweist, der sich senkrecht zu dem ersten Abschnitt (21) erstreckt, und
der zweite Abschnitt (22) des ersten Festspannelements (20) durch ein erstes Verankerungselement (40) am Boden verankert ist.

8. Festspannverfahren nach Anspruch 7, umfassend ferner das Befestigen des ersten Zapfens (14A) und des vorspringenden Elements (23) des ersten Festspannelements (20) mittels eines ersten Befestigungselements (30).

9. Festspannverfahren nach einem beliebigen der Ansprüche 7 oder 8, geeignet für das Festspannen zweier Behälter am Boden, bei dem mindestens ein Ausrichtungselement (11) einen Verankerungsspaten (13) und mindestens einen ersten Zapfen (14A) und einen zweiten Zapfen (14B) aufweist, wobei das Verfahren ferner Folgendes umfasst:
die Positionierung - an dem Ausrichtungselement (11) - eines Eckstücks (4B) des zweiten Behälters mittels des zweiten Zapfens (14B), der in eine untere Öffnung (5B) des Eckstücks (4B) des zweiten Behälters greift,
das Einsetzen - in eine seitliche Öffnung (6B) des Eckstücks (4B) des zweiten Behälters - eines Vorspringendes Elements (23) eines ersten Abschnitts (21) eines zweiten Festspannelements (20), wobei das zweite Festspannelement (20) einen zweiten Abschnitt (22) aufweist, der sich senkrecht zu dem ersten Abschnitt (21) erstreckt, die Bodenverankerung des zweiten Abschnitts (22) des zweiten Festspannelements (20) mittels eines ersten Verankerungselements (40).

10. Festspannverfahren nach Anspruch 9, umfassend ferner das Befestigen des ersten Zapfens (14A) und des vorspringendes Elements (23) des zweiten Festspannelements (20) mittels eines ersten Befestigungselements (30).

## Claims

1. A device for clamping a container to the ground comprising:
an alignment member (10, 11) comprising a first pin (14_{A}) configured for protruding into a lower opening (5_{A}) of a corner fitting (4_{A}) of a first container,
and a first clamping member (20) comprising a first portion (21), said first portion (21) comprising a projection member (23) configured for protruding into a lateral opening (6_{A}) of the corner fitting (4_{A}) of the first container,
**characterized in that** the alignment member (10, 11) comprises a lug (13) for anchoring to the ground,
and **in that** the first clamping member (20) comprises a second portion (22) substantially extending perpendicularly to the first portion (21) and at least one first anchoring member (40) configured for anchoring the second portion (22) of the first clamping element (20) to the ground.

2. The device according to claim 1, further comprising a first fixation member (30) configured for fixing the first pin (14_{A}) to the projection member (23) of the first clamping member (20).

3. The device according to any one of the preceding claims, wherein the alignment member (10, 11) comprises a support member (12) disposed between and connected to the lug (13) and to the first pin (14_{A}).

4. The device according to claim 3, wherein the support member (12) comprises a shim (16) disposed over all or part of at least one support member (12) surface.

5. The device according to any one of the preceding claims, wherein:
the alignment member (11) further comprises a second pin (14_{B}) configured for protruding into a lower opening (5_{B}) of a corner fitting (4_{B}) of a second container,
the device further comprising:
a second clamping member (20) comprising a first portion (21) and a second portion (22) substantially extending perpendicularly to the first portion (21), the first portion (21) comprising a projection member (23) configured for protruding into a lateral opening (6_{B}) of the corner fitting (4_{B}) of the second container,
at least one second anchoring member (40) configured for anchoring the second portion (22) of the second clamping member (20) to the ground.

6. The device according to claim 5, further comprising a second fixation member (30) configured for fixing the second pin (14_{B}) to the projection member (23) of the second clamping member (20).

7. A method of clamping at least one first container to the ground comprising:
anchoring alignment members (10, 11) to the ground at locations intended for the corner fittings of the first container, each alignment member comprising at least one first pin (14_{A}),
positioning, on each alignment member (10, 11) of a corner fitting (4_{A}) of the first container by means of the first pin (14_{A}) engaging in a lower opening (5_{A}) of the corner fitting (4_{A}) of the first container,
and inserting, in a lateral opening (6_{A}) of the corner fitting (4_{A}) of the first container, a projection member (23) of a first portion (21) of a first clamping member (20),
**characterized in that** the alignment member (10, 11) comprises a lug (13) for anchoring to the ground,
and **in that** the first clamping member (20) comprises a second portion (22) extending perpendicularly to the first portion (21),
and **in that** the second portion (22) of the first clamping member (20) is anchored to the ground by a first anchoring member (40).

8. The clamping method according to claim 7, further comprising the fixation of the first pin (14_{A}) and the projection member (23) of the first clamping member (20) by means of a first fixation member (30).

9. The clamping method according to any one of claims 7 or 8 configured for clamping two containers to the ground, wherein at least one alignment member (11) comprises an anchoring lug (13) and at least one first pin (14_{A}) and a second pin (14_{B}), the method further comprises:
positioning, on said alignment member (11), a corner fitting (4_{B}) of the second container by means of the second pin (14_{B}) engaging in a lower opening (5_{B}) of the corner fitting (4_{B}) of the second container,
inserting, in a lateral opening (6_{B}) of the corner fitting (4_{B}) of the second container, a projection member (23) of a first portion (21) of a second clamping member (20), the second clamping member (20) comprising a second portion (22) extending perpendicularly to the first portion (21),
anchoring the second portion (22) of the second clamping member (20) to the ground by a first anchoring member (40).

10. The clamping method according to claim 9, further comprising the fixation of the first pin (14_{B}) and of the projection member (23) of the second clamping member (20) by means of a second fixation member (30).
